# EUROPEAN PATENT APPLICATION

(11) **EP 4 345 179 A1**
(43) Date of publication of application: **03.04.2024**
(21) Application number: 23195229.2
(22) Date of filing: 04.09.2023
(51) Int. Cl.: C22B 9/00, C22B 9/05, C22B 21/06, B22D 1/00

(54) **PURIFICATION METHOD OF RECOVERED ALUMINUM MELT FOR AUTOMOBILE HUB**

(30) Priority: 29.09.2022 CN 202211195698
(71) Applicant: Citic Dicastal Co., Ltd., Quinhuangdao Heibei 066011 (CN); Citic Co., Limited, Beijing 100020 (CN)
(72) Inventor: LIANG, Xin, Qinhuangdao, 066011 (CN); BAI, Bangwei, Qinhuangdao, 066011 (CN); LIU, Haifeng, Qinhuangdao, 066011 (CN); LI, Rui, Qinhuangdao, 066011 (CN); ZHANG, Hongren, Qinhuangdao, 066011 (CN); QIN, Peng, Qinhuangdao, 066011 (CN); WU, Qunhu, Qinhuangdao, 066011 (CN); WANG, Ji, Qinhuangdao, 066011 (CN); MA, Chao, Qinhuangdao, 066318 (CN); XIE, Liming, Qinhuangdao, 066318 (CN); MA, Baoshui, Qinhuangdao, 066318 (CN)
(74) Representative: Gong, Jinping

(57) **Abstract**

A purification method of a recovered aluminum melt for an automobile hub includes nitrogen degassing of a gas permeable brick pouring ladle bottom layer arranged on a lower portion of a gas permeable brick pouring ladle and argon degassing of a rotor degasser arranged on an upper portion. The invention has a good degassing and deslagging effect and high purification efficiency, and achieves energy conservation and environmental protection.

## Description

### TECHNICAL FIELD

The invention relates to the technical field of aluminum alloys, in particular to a purification method of a recovered aluminum melt for an automobile hub.

### BACKGROUND

Aluminum alloy is widely used in aviation, aerospace, automobile transportation, building construction, medical treatment and other fields because of its low density, high strength, good plasticity, excellent thermal conductivity, electrical conductivity, corrosion resistance and other characteristics. With the development of economy and society, the demand of society for aluminum alloy is increasing, and the consumption of aluminum alloy is also growing year by year, which makes it the main metal material at present. However, with the increasing pressure on protecting the environment and reducing energy consumption, aluminum alloy is also facing pressure from environmental and energy consumption aspects.

The production procedure of aluminum alloy mainly includes steps of bauxite mining, alumina electrolysis, alloying composition adjustment of a primary aluminum melt, aluminum alloy ingot casting, etc. According to research results of literature, mining of every 1 ton of bauxite will produce 5 tons of consumed mineral resources and destroy 1.314 m² of vegetation, production of 1 ton of alumina will produce 1 ton of red mud, and the electrolysis process of alumina consumes about 14,000 KW/h of electricity and produces 18 Kg of solid waste and 25 Kg of hazardous waste. According to statistical results of the International Aluminum Association: the global demand for aluminum has reached 95 million tons in 2018, of which 64 million tons of demand need to be met by the production of bauxite ore. In view of the high energy consumption and high pollution generated during the production process of aluminum alloy, this will undoubtedly seriously hinder the application progress of aluminum alloy and bring great pressure to human environmental protection.

Facing the pressure of energy consumption and environmental protection brought by the production process of primary aluminum, domestic scientific researchers are increasingly concerned about recovery and reuse of aluminum alloy. Compared with the production of primary aluminum, recovery of aluminum scrap will save 14 m³ of water resources and 3.4 t of standard coal per ton, reduce total energy consumption by 20 times, reduce solid waste by 20 t, and reduce greenhouse gas emission by 24 times, so the research and application of recovered aluminum will become an effective way to solve the problems of high pollution and high energy consumption of aluminum alloy. The usage amount of recovered aluminum reached 31 million tons in 2018, and the global demand for aluminum will grow by 80% by 2050 according to the International Aluminum Association's forecast. This means that the supply of recovered aluminum will continue to increase, with demand expected to be as high as 70 million tons by 2050.

Aluminum is the most efficient metal to recover and reuse. Aluminum metal can be recovered repeatedly and recycled almost infinitely, making it the most credible and efficient sustainable material. Through a comprehensive global database and an original developed logistics analysis system, the International Aluminum Association analyzes the material flow of aluminum every year, allowing for the traceability of aluminum waste by aluminum product, quality, form and geographic category, including the entire process from the source of waste generation to end consumption. Compared with the production of primary aluminum from bauxite, the production of recycled aluminum requires 95% less energy, effectively reducing and avoiding pollutant emissions, including greenhouse gases. 75% of the global aluminum is still in use today. Of the nearly 1.5 billion tons of aluminum produced worldwide to date, about 75% is still in use in various application segments.

Transportation is the most important recovery field for aluminum. The transportation industry is the most important field for aluminum scrap recovery, both in terms of recovery volume and recovery rate. This industry recovers the most aluminum scrap, with a recovery volume of 9 million tons in tonnage and a recovery rate of 86%. The recovery and application of aluminum products in the transportation industry will become a key field of research in the future recovered aluminum industry. The application of recovered aluminum in the automobile industry will promote the process of aluminum recovery in transportation, and the application of recovered aluminum will be the focus of research for automobile hubs, which are currently the largest aluminum-using parts among automobile parts.

With the increase of demand for recovered aluminum and the expansion of application scope, leftover materials, end-of-life automobile parts, used cans, old aluminum alloy doors and windows and the like produced in the manufacturing process of aluminum alloy are made into new aluminum alloy products again through recovery. Due to the current imperfect management system of scrap aluminum alloy, unclear classification of aluminum alloy recovery, immature technology of aluminum alloy recovery equipment, complicated chemical composition of scrap aluminum alloy, too many impurity elements in scrap aluminum, difficulty in removing supporting parts, etc., it is difficult to apply most of recovered aluminum to automobile hubs, resulting in downgrading and serious waste of resources. Secondly, as safety parts, automobile aluminum alloy hubs have strict requirements on the quality of recovered aluminum. At present, for a recovered aluminum melt obtained through conventional refining and degassing, slagging and other purification technology processing, tiny slag inclusions, gases, etc. still exist inside the melt, it is difficult to reach conditions required by automobile part preparation, and there are safety potential risks. Therefore, it is necessary to invent a purification method of a recovered aluminum melt for an automobile hub with good degassing and deslagging effects, high purification efficiency, energy conservation and environmental protection.

### SUMMARY

In view of this, the invention aims to provide a purification method of a recovered aluminum melt for an automobile hub, which corresponds to solve the problems of the high hydrogen content inside the melt, the large volume of tiny slag inclusions, long degassing time, environmental pollution caused by the use of a slag removal agent, high treatment cost, etc. during a melt treatment process of recovered aluminum raw materials used for the automobile hub after melting, and the provided purification method of the recovered aluminum melt has good degassing and deslagging effects, high purification efficiency, energy conservation and environmental protection. The purification method mainly includes technological parameters of lower gas permeable brick pouring ladle nitrogen degassing and upper rotor degasser argon degassing. The invention is mainly joint degassing purification of the bottom gas permeable brick degassing and upper rotor degasser degassing, through inert gas types, gas position distribution, a melt temperature, inert gas flow rates, inert gas pressures, inert degassing time, a degassing rotor rotation speed and other technological parameters of the aluminum melt, the role of the purification method in a process of improving the quality of the recovered aluminum melt is maximized, and finally the effects of reducing the gas content inside the recovered aluminum melt, reducing the content of the tiny slag inclusions, shortening degassing time and reducing the usage amount of inert gases are achieved. The invention has significant effects on improving the quality of the recovered aluminum melt, reducing internal defects, improving degassing efficiency, etc. and is the purification method of the recovered aluminum melt with good degassing and deslagging effects, high purification efficiency, energy conservation and environmental protection.

To achieve the objectives described above, the technical solution of the invention is achieved as follows:
A purification method of a recovered aluminum melt for an automobile hub, wherein lower gas permeable brick pouring ladle nitrogen degassing and upper rotor degasser argon degassing are mainly related to the quality of the recovered aluminum melt. Therefore, the inert gas types, gas position distribution, a melt temperature, inert gas flow rates, inert gas pressures, inert degassing time, a degassing rotor rotation speed and other technological parameters of the recovered aluminum melt are the key to the technical solution.

The inert gas types, gas position distribution, a melt temperature, inert gas flow rates, inert gas pressures, inert degassing time, a degassing rotor rotation speed and other technological parameters used for degassing the recovered aluminum melt are required as follows:
First: due to the use of recovered waste hubs, leftover materials, aluminum chips, electrical conductors and other scrap materials as raw materials, dust, sludge, greasy dirt, crystalline salt, fiber dust, inorganic coatings, rubber, glass and other slag inclusions existing inside the recovered aluminum melt are difficult to clean up, and the above slag inclusions will inevitably exist in the molten recovered aluminum melt. Since the slag inclusions are distributed inside the aluminum melt after melting at a high temperature, the purification method of lower gas permeable brick pouring ladle lower layer nitrogen degassing and upper rotor degasser argon degassing is adopted. In a process of degassing purification, three bottom gas permeable bricks should be adopted to be distributed at 120°, and a depth of a degassing rotor extending into the aluminum melt is 30 cm-70 cm below an aluminum liquid surface.

Second: the slag inclusions and gases in the recovered aluminum melt and melt viscosity will change with a temperature of aluminum liquid, in order to ensure a purification effect of gas permeable brick pouring ladle lower nitrogen degassing and upper rotor degasser argon degassing, it is necessary to consider the change of solubility of the gases in the aluminum melt, a floating speed of the slag inclusions, the viscosity of the recovered aluminum melt and other factors, and a temperature of the recovered aluminum melt is controlled at 740°C-760°C.

Third: due to mixed types of raw materials of the recovered aluminum and the difficulty of completely removing oil, stains, impurities, etc. from the surface of recovered scrap, it leads to problems such as complex types of impurities, different particle sizes and differences in wettability with the surface of the aluminum melt in the molten recovered aluminum melt. A lower gas permeable pouring ladle degassing process is performed in two stages, in the first stage, a nitrogen gas flow rate is 20 L/min-35 L/min, a gas pressure is 0.3 MPa-0.55 MPa, and degassing time is 120-240 s; and in the second stage, a nitrogen gas flow rate is 10 L/min-20 L/min, a gas pressure is 0.2 MPa-0.35 MPa, and degassing time is 180-300 s. An upper rotor degassing process is performed in two stages, in the first stage, an argon gas flow rate is 30 L/min-45 L/min, a rotor rotation speed is 400 rpm-550 rpm, and degassing time is 180-280 s; and in the second stage, an argon gas flow rate is 40 L/min-65 L/min, a rotor rotation speed is 300 rpm-420 rpm, and degassing time is 200-360 s.

Substantive features of the invention are:
current unclear classification of scrap aluminum alloy, mixed raw materials and a low level of a pretreatment technology, coupled with too many impurity elements in scrap aluminum lead to the difficulty of applying most of recovered aluminum to automobile hubs. Secondly, as safety parts, the automobile aluminum alloy hubs have strict requirements on the quality of the recovered aluminum. Thirdly, dust, sludge, oil, crystalline salt, fiber dust, inorganic coatings, rubber, glass and other slag inclusions existing inside the recovered aluminum raw materials are difficult to remove effectively from aluminum melt, which seriously restricts the application of the recovered aluminum in the automobile hubs.

At present, melt degassing purification in the aluminum alloy industry generally often adopts rotor degassing purification, gas permeable brick degassing purification, slag removal agents and other methods, due to the complicated composition and small particle size of slag inclusions in the recovered aluminum raw materials, the internal slag inclusions after recovery and melting are diffusely distributed and have a large bonding force with the aluminum melt, which are difficult to remove completely by conventional degassing purification means. A degassing purification process of a rotor degasser relies on a rotor rotation shearing an inert gas into tiny bubbles and melt flow formed by the rotor rotation, so that the slag inclusions and gases in the horizontal direction of the melt adsorb on the surface of an inert body, finally effects of deslagging and degassing are completed, but for the high-density slag inclusions at the bottom of the melt and the slag inclusions in the vertical direction, it is difficult to form a good removal and purification effect. Similarly, gas permeable brick degassing is to arrange gas permeable bricks at the bottom of a pouring ladle, an inert gas enters the melt through the gas permeable bricks, and inert bubbles adsorb the slag inclusions and harmful gases in the vertical direction of the melt to form the effect of degassing purification. As the inert bubbles in the melt need time to float up, and the inert gas is not uniformly distributed, the effect of removing the slag inclusions and harmful gases in the horizontal direction is not satisfactory. Therefore, the current degassing purification methods have disadvantages for the application of recovered aluminum on safety parts such as automobile hubs and an insufficient purification effect on the aluminum melt, which severely restricts the application scope of the recovered aluminum.

The invention adopts the degassing purification method of lower gas permeable brick nitrogen degassing and upper rotor degasser argon degassing, combining the effect of rotor degassing with the effect of gas permeable brick degassing. In the process of degassing, the size, distribution, degree of dispersion, density of the slag inclusions and other factors of defects such as the slag inclusions and gases inside the recovered aluminum melt are comprehensively considered, and all-round degassing of the recovered aluminum melt is realized by the method of lower gas permeable brick and upper rotor degassing. Degassing of the three gas permeable bricks distributed at 120° on the lower portion can ensure that the inert gas introduced from the lower portion fully covers the entire bottom of the melt, and the inert gas can be fully distributed in the vertical direction, especially for the lower position to which the inert gas of rotor degassing cannot be diffused (such as the edge part), the slag inclusions and gases at the bottom of the melt can be adsorbed on the surface of the inert gas and float up with the inert gas, having a good removal effect for the slag inclusions and gases in the vertical direction of the melt; and in the process of rotor degassing, the degassing rotor extends 30 cm-70 cm below the liquid level of the aluminum melt, with the rotation of the rotor, turbulent flow of the melt can be formed in a melt plane where the rotor is located, and there is part of melt flow in the vertical direction, which promotes the upward floating of the inert gas introduced from the lower portion while capturing the slag inclusions and gases in the horizontal direction of the melt, which is the biggest difference between the invention and other degassing purification modes.

High purity nitrogen and high purity argon adopted in the invention enter the aluminum melt at different positions in the degassing process. The high purity nitrogen is introduced into the aluminum melt through the lower gas permeable bricks, and mainly floats up from the lower portion so as to adsorb the slag inclusions and harmful gases in the process of degassing, the high purity argon is introduced into the melt from the upper portion through the rotor degasser for the slag inclusions and harmful gases in the horizontal direction, and the positions of the gases introduced into the melt are also different from those of other degassing methods. In the process of degassing purification of the aluminum melt, fine inert bubbles combine with the slag inclusions and gases in the melt and float to the surface of the melt from inside the melt under the action of gas buoyancy, and then the slag inclusions and gases are removed by means of slagging. The invention fully considers the characteristics of the two gases and integrates factors such as the floating speed of the two inert gases in the melt, so that the inert gases can combine with the slag inclusions and gases to the maximum extent to enhance the melt purification effect and improve the purification efficiency.

The degassing purification temperature of the recovered aluminum melt in the invention is different compared with a normal aluminum alloy degassing technology. After the aluminum alloy hub is melted using a normal aluminum ingot, the degassing process is generally at a relatively low temperature of about 700°C-730°C. Since the normal aluminum ingot has a single type of slag inclusion and a single type of harmful gas, and the melt is controlled at the temperature, the burn loss is small, and energy is saved. As the recovered aluminum melt contains oil, dust, fibers, paint and other products after a high temperature melting reaction, and the harmful gases generated by volatile substances also exist in the melt, these slag inclusions and harmful gases seriously affect the viscosity of the melt, and have a significant impact on flow of the melt, floating of the inert gases, and the solubility of harmful gases during the degassing purification process. The slag inclusions and the harmful gases inside the melt can ensure that the viscosity of the melt is suitable for degassing purification at the temperature specified in the invention, and the solubility of the harmful gases is minimized to facilitate the escape of the harmful gases from the melt. Secondly, the degassing purification process requires comprehensive consideration of the viscosity of the melt, a contact angle between the melt and the inert gases, fluidity of the melt and other factors after the inert bubbles adsorb the slag inclusions and the harmful gases, so degassing purification of the recovered aluminum melt needs to be performed at a high temperature.

Lower and upper gas parameters are controlled differently in the invention. The invention comprehensively considers the type and size of the slag inclusions inside the recovered aluminum melt, the gas solubility, the distribution state of suspended particles, and the influence on floating of the inert gases during the melt flowing process. The lower gas permeable brick degassing purification process is performed in two stages, in the first stage, a nitrogen gas flow rate is 20 L/min-35 L/min, a gas pressure is 0.3 MPa-0.55 MPa, and degassing time is 120-240 s; and in the second stage, a nitrogen gas flow rate is 10 L/min-20 L/min, a gas pressure is 0.2 MPa-0.35 MPa, and degassing time is 180-300 s. The upper rotor degassing purification process is performed in two stages, in the first stage, an argon gas flow rate is 30 L/min-45 L/min, a rotor rotation speed is 400 rpm-550 rpm, and degassing time is 180-280 s; and in the second stage, an argon gas flow rate is 40 L/min-65 L/min, a rotor rotation speed is 300 rpm-420 rpm, and degassing time is 200-360 s. Upper degassing and lower degassing are both divided into two stages, which can fully ensure the formation of a good gas turbulence effect in the first stage of degassing purification, and promote the full contact between the inert gases and the slag inclusions and gases inside the melt; and in the second stage, fully ensure floating of the inert gases and the capture effect on the internal slag inclusions and harmful gases. The two-stage degassing purification method makes full use of the characteristics of the slag inclusions and the harmful gases inside the melt, as well as dispersion and floating of the inert gases, and flow characteristics of the melt in the vertical and horizontal directions in the degassing purification process, to maximize the degassing effect of nitrogen and argon, while reducing the usage amount of gases and avoiding the use of the slag removal agent which increases cost and environmental pollution.

Compared with the prior art, the purification method of the recovered aluminum melt for the automobile hub provided by the invention has the following advantages.

Currently, the mixed types of aluminum scrap, the presence of paint on the surface, insufficient pretreatment, and too many types of impurity elements lead to the low quality of most recovered aluminum melts. Secondly, the dust, sludge, oil, crystalline salt, fiber dust, inorganic coatings, rubber, glass and other slag inclusions existing in the recovered aluminum raw materials are mixed in the melt during the melting process, forming a variety of compounds that are finely and diffusely dispersed inside the melt, while paint and other low-melting-point substances volatilize at the high temperature to produce harmful gases dissolved in the aluminum liquid, thus causing serious impact on the quality of the recovered aluminum melt, as well as being a challenge to degassing purification methods. First, the commonly used degassing methods hardly achieve a good purification effect due to impacts of the complicated composition and small particle size of slag inclusions in the recovered aluminum raw materials, harmful gases diffused inside the melt, etc. At the same time, the existing degassing methods have disadvantages, the rotor degasser has a good degassing effect on slag inclusions and gases in the horizontal direction of the melt, but for high-density slag inclusions at the bottom of the melt and slag inclusions in the vertical direction, it is difficult to form a good removal effect. Gas permeable brick degassing has a good degassing effect on slag inclusions and gases in the vertical direction of the melt, but as inert bubbles in the melt need time to float up, and the inert gas is not uniformly distributed, the effect of removing slag inclusions and gases in the horizontal direction is not satisfactory. Secondly, for conditions of a great variety, fine particles and uneven distribution of slag inclusions existing inside the melt, and distribution and diffusion of harmful gases, the commonly used degassing modes often adopt methods of increasing a gas flow rate, prolonging degassing time, replacing with a higher-purity inert gas, etc., which seriously affect and reduce degassing efficiency, increase the cost of degassing, and damage the life of a degassing apparatus at the same time. The invention provides the degassing purification method of the recovered aluminum melt with good degassing and deslagging effects, high purification efficiency, energy conservation and environmental protection for the above problems.
(1) The invention adopts the purification method of lower gas permeable brick nitrogen degassing and upper rotor degasser argon degassing, reasonable arrangement of gas permeable brick distribution and rotor position in the melt, can give full play to the degassing effects of the gas permeable bricks and the rotor, to ensure that the slag inclusions inside the recovered aluminum melt is fully in contact with the inert gases, and at the same time has a good degassing effect on the slag inclusions both in the vertical direction and the horizontal direction. After taking a K model on the recovered aluminum melts treated by the degassing purification method of the invention and the conventional degassing method to compare ratios of slag inclusions, a K value of the melt treated by the conventional degassing method is about 0.35 on average, a K value of the recovered aluminum melt treated by the degassing method of the invention is about 0.05 on average, and thus it can be seen that the invention has a good purification effect on the slag inclusions inside the recovered aluminum melt.
(2) The invention adopts the joint degassing purification method of the lower gas permeable bricks and the upper rotor, which has a good removal effect on the harmful gases inside the recovered aluminum melt. The inert gases in the invention can be fully and uniformly distributed inside the recovered aluminum melt, which greatly increases the probability of contact between the inert bubbles and the harmful gases, and secondly, the reasonable arrangement of the position where the inert gases are introduced can promote flowing of the melt and floating of the inert bubbles, which can realize the effect of efficient degassing. Comparing the degassing purification effects of the conventional degassing method and the degassing method of the invention, and analyzing the treated recovered aluminum melts according to the requirement of density measurement by decompression solidification, it can be concluded that a sampling density of the melt after conventional treatment is about 2.56 g/cm³, and a sampling density of the melt after the treatment of the invention is about 2.64 g/cm³. Therefore, the invention has a good degassing purification effect on the gases inside the recovered aluminum melt.
(3) The degassing purification efficiency can be greatly improved by adopting the degassing method of the invention. In the degassing purification stage, the degassing purification effect of the aluminum alloy melt is mainly ensured by the gas flow rate and degassing time, so if the degassing time is long, the degassing efficiency will be seriously affected. The degassing purification method in the invention combines lower gas permeable brick and upper rotor degassing methods to form uniform inert bubbles in the vertical and horizontal directions within a short time, increasing the probability of contact between the inert gases and slag inclusions as well as harmful gases, thus improving the degassing purification efficiency, and reducing the cost of degassing. By comparing and analyzing degassing time and gas usage amounts between the degassing purification method of the invention and the conventional degassing method, in the conventional degassing method, the degassing efficiency is about 15.4 min/t, the consumption of inert gases is 18.2 L/t, while in the degassing method of the invention, the degassing efficiency is 11.4 min/t, and the consumption of inert gases is 14.3 L/t. Therefore, the invention can achieve the effects of improving the degassing efficiency and reducing the gas consumption.
(4) The gas permeable brick pouring ladle, the inert gases, the degasser, temperature measurement galvanic couples, etc. involved in the invention are all conventional devices and materials in the industry, and production technologies of these devices and materials are mature and stable, so they will not increase the cost of melt degassing. Therefore, the invention has the effects of being easy to implement, economical and practical.

### BRIEF DESCRIPTION OF THE DRAWINGS

The accompanying drawings which form part of the invention are used to provide a further understanding of the invention, and schematic embodiments of the invention and the description thereof are used to explain the invention and do not constitute an improper limitation of the invention. In the accompanying drawings:

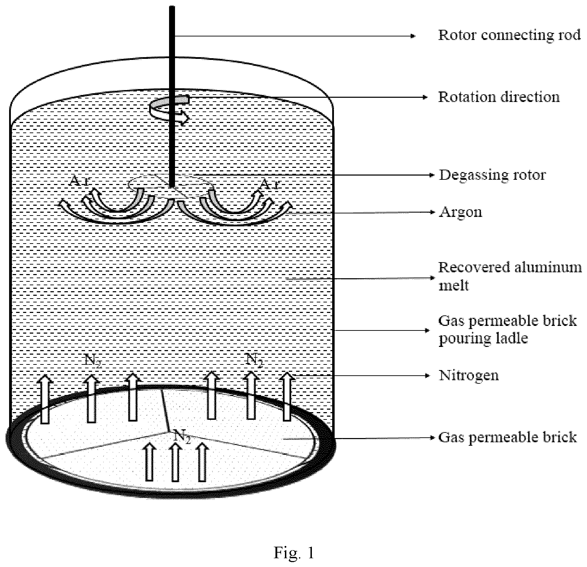

Fig. 1 is a schematic diagram of a purification method of a recovered aluminum melt for an automobile hub of the present invention.

### DETAILED DESCRIPTION

It should be noted that embodiments in the invention and features in the embodiments can be combined with each other in the case of not conflicting.

A technical solution of the present invention will be clearly and completely described below with reference to the accompanying drawing and in conjunction with the embodiments. Apparently, the described embodiments are only part of the embodiments of the invention, not all of them. Based on the embodiments of the invention, all other embodiments obtained by those of ordinary skill in the art without creative work fall within the protection scope of the invention.

A purification method of a recovered aluminum melt for an automobile hub of the embodiments of the invention is described below in conjunction with the embodiments.

### Embodiment 1:

The embodiment of the invention provides a degassing method of a recovered aluminum melt for an automobile hub, and the degassing method is mainly composed of degassing technological parameters such as flow rates of lower nitrogen and upper argon, gas pressures, degassing time, a rotation speed and melt standing time.

Recovered aluminum scrap is put into a melting furnace, a furnace temperature, a furnace pressure and other parameters are set according to a structure of the melting furnace and a manufacturer's operating instructions, after all the scrap in the furnace is melted into aluminum liquid, the aluminum liquid in the melting furnace is slagged to remove floating slag on the surface of the aluminum liquid in the furnace to ensure that the surface of the aluminum liquid is clean, and the aluminum liquid is introduced into a gas permeable brick pouring ladle to prepare for melt degassing. Before the aluminum liquid is introduced into gas permeable bricks, it is needed to ensure that the temperature of the aluminum liquid is above 740°C. The gas permeable brick pouring ladle filled with the aluminum melt is transferred to a degassing device for melt degassing. Degassing is mainly composed of lower gas permeable brick nitrogen degassing and upper rotor argon degassing jointly, nitrogen and argon are both used in high purity states, and lower and upper degassing processes are performed simultaneously. The temperature of the aluminum melt in the pouring ladle is measured, and degassing is started when the temperature is 740±1°C. Control parameters of the lower gas permeable brick pouring ladle are: in a first stage, the nitrogen gas flow rate is 20 L/min, the gas pressure is 0.3 MPa, and the degassing time is 240 s; and in a second stage, the nitrogen gas flow rate is 10 L/min, the gas pressure is 0.35 MPa, and the degassing time is 300 s. Control parameters of the upper rotor degassing process are: a degasser rotor extends 30 cm below a liquid level of the melt in the pouring ladle, in a first stage, the argon gas flow rate is 30 L/min, the rotor rotation speed is 400 rpm, and the degassing time is 280 s; and in a second stage, the argon gas flow rate is 40 L/min, the rotor rotation speed is 420 rpm, and the degassing time is 360 s. After the lower and upper degassing processes are finished, the degassing process of the recovered aluminum melt is finally completed. The floating slag on the surface of the aluminum melt in the pouring ladle is removed. Analyses of chemical composition, melt hydrogen content and melt slag inclusions are performed on the aluminum liquid in the pouring ladle, and then the aluminum liquid is transferred to a die casting machine for production of the aluminum alloy hub after detection results are qualified.

### Embodiment 2:

The embodiment of the invention provides a degassing method of a recovered aluminum melt for an automobile hub, and the degassing method is mainly composed of degassing technological parameters such as flow rates of lower nitrogen and upper argon, gas pressures, degassing time, a rotation speed and melt standing time.

Recovered aluminum scrap is put into a melting furnace, a furnace temperature, a furnace pressure and other parameters are set according to a structure of the melting furnace and a manufacturer's operating instructions, after all the scrap in the furnace is melted into aluminum liquid, the aluminum liquid in the melting furnace is slagged to remove floating slag on the surface of the aluminum liquid in the furnace to ensure that the surface of the aluminum liquid is clean, and the aluminum liquid is introduced into a gas permeable brick pouring ladle to prepare for melt degassing. Before the aluminum liquid is introduced into gas permeable bricks, it is needed to ensure that the temperature of the aluminum liquid is above 750°C. The gas permeable brick pouring ladle filled with the aluminum melt is transferred to a degassing device for melt degassing. Degassing is mainly composed of lower gas permeable brick nitrogen degassing and upper rotor argon degassing jointly, nitrogen and argon are both used in high purity states, and lower and upper degassing processes are performed simultaneously. The temperature of the aluminum melt in the pouring ladle is measured, and degassing is started when the temperature is 750±1°C. Control parameters of the lower gas permeable brick pouring ladle are: in a first stage, the nitrogen gas flow rate is 25 L/min, the gas pressure is 0.35 MPa, and the degassing time is 200 s; and in a second stage, the nitrogen gas flow rate is 14 L/min, the gas pressure is 0.30 MPa, and the degassing time is 240 s. Control parameters of the upper rotor degassing process are: a degasser rotor extends 40 cm below a liquid level of the melt in the pouring ladle, in a first stage, the argon gas flow rate is 35 L/min, the rotor rotation speed is 450 rpm, and the degassing time is 250 s; and in a second stage, the argon gas flow rate is 50 L/min, the rotor rotation speed is 380 rpm, and the degassing time is 300 s. After the lower and upper degassing processes are finished, the degassing process of the recovered aluminum melt is finally completed. The floating slag on the surface of the aluminum melt in the pouring ladle is removed. Analyses of chemical composition, melt hydrogen content and melt slag inclusions are performed on the aluminum liquid in the pouring ladle, and then the aluminum liquid is transferred to a die casting machine for production of the aluminum alloy hub after detection results are qualified.

### Embodiment 3:

The embodiment of the invention provides a degassing method of a recovered aluminum melt for an automobile hub, and the degassing method is mainly composed of degassing technological parameters such as flow rates of lower nitrogen and upper argon, gas pressures, degassing time, a rotation speed and melt standing time.

Recovered aluminum scrap is put into a melting furnace, a furnace temperature, a furnace pressure and other parameters are set according to a structure of the melting furnace and a manufacturer's operating instructions, after all the scrap in the furnace is melted into aluminum liquid, the aluminum liquid in the melting furnace is slagged to remove floating slag on the surface of the aluminum liquid in the furnace to ensure that the surface of the aluminum liquid is clean, and the aluminum liquid is introduced into a gas permeable brick pouring ladle to prepare for melt degassing. Before the aluminum liquid is introduced into gas permeable bricks, it is needed to ensure that the temperature of the aluminum liquid is above 755°C. The gas permeable brick pouring ladle filled with the aluminum melt is transferred to a degassing device for melt degassing. Degassing is mainly composed of lower gas permeable brick nitrogen degassing and upper rotor argon degassing jointly, nitrogen and argon are both used in high purity states, and lower and upper degassing processes are performed simultaneously. The temperature of the aluminum melt in the pouring ladle is measured, and degassing is started when the temperature is 755±1°C. Control parameters of the lower gas permeable brick pouring ladle are: in a first stage, the nitrogen gas flow rate is 30 L/min, the gas pressure is 0.45 MPa, and the degassing time is 160 s; and in a second stage, the nitrogen gas flow rate is 18 L/min, the gas pressure is 0.25 MPa, and the degassing time is 320 s. Control parameters of the upper rotor degassing process are: a degasser rotor extends 50 cm below a liquid level of the melt in the pouring ladle, in a first stage, the argon gas flow rate is 40 L/min, the rotor rotation speed is 500 rpm, and the degassing time is 210 s; and in a second stage, the argon gas flow rate is 55 L/min, the rotor rotation speed is 340 rpm, and the degassing time is 250 s. After the lower and upper degassing processes are finished, the degassing process of the recovered aluminum melt is finally completed. The floating slag on the surface of the aluminum melt in the pouring ladle is removed. Analyses of chemical composition, melt hydrogen content and melt slag inclusions are performed on the aluminum liquid in the pouring ladle, and then the aluminum liquid is transferred to a die casting machine for production of the aluminum alloy hub after detection results are qualified.

### Embodiment 4:

The embodiment of the invention provides a degassing method of a recovered aluminum melt for an automobile hub, and the degassing method is mainly composed of degassing technological parameters such as flow rates of lower nitrogen and upper argon, gas pressures, degassing time, a rotation speed and melt standing time.

Recovered aluminum scrap is put into a melting furnace, a furnace temperature, a furnace pressure and other parameters are set according to a structure of the melting furnace and a manufacturer's operating instructions, after all the scrap in the furnace is melted into aluminum liquid, the aluminum liquid in the melting furnace is slagged to remove floating slag on the surface of the aluminum liquid in the furnace to ensure that the surface of the aluminum liquid is clean, and the aluminum liquid is introduced into a gas permeable brick pouring ladle to prepare for melt degassing. Before the aluminum liquid is introduced into gas permeable bricks, it is needed to ensure that the temperature of the aluminum liquid is above 760°C. The gas permeable brick pouring ladle filled with the aluminum melt is transferred to a degassing device for melt degassing. Degassing is mainly composed of lower gas permeable brick nitrogen degassing and upper rotor argon degassing jointly, nitrogen and argon are both used in high purity states, and lower and upper degassing processes are performed simultaneously. The temperature of the aluminum melt in the pouring ladle is measured, and degassing is started when the temperature is 760±1°C. Control parameters of the lower gas permeable brick pouring ladle are: in a first stage, the nitrogen gas flow rate is 35 L/min, the gas pressure is 0.55 MPa, and the degassing time is 120 s; and in a second stage, the nitrogen gas flow rate is 20 L/min, the gas pressure is 0.35 MPa, and the degassing time is 180 s. Control parameters of the upper rotor degassing process are: a degasser rotor extends 70 cm below a liquid level of the melt in the pouring ladle, in a first stage, the argon gas flow rate is 45 L/min, the rotor rotation speed is 550 rpm, and the degassing time is 180 s; and in a second stage, the argon gas flow rate is 65 L/min, the rotor rotation speed is 300 rpm, and the degassing time is 200 s. After the lower and upper degassing processes are finished, the degassing process of the recovered aluminum melt is finally completed. The floating slag on the surface of the aluminum melt in the pouring ladle is removed. Analyses of chemical composition, melt hydrogen content and melt slag inclusions are performed on the aluminum liquid in the pouring ladle, and then the aluminum liquid is transferred to a die casting machine for production of the aluminum alloy hub after detection results are qualified.

**Table 1 Statistical table of K values of recovered aluminum melt after degassing**

| Degassi ng | Conventional degassing method | Degassing method of the invention | | | | | | |
|---|---|---|---|---|---|---|---|---|
| method | | | | | | | | |
| Categor y of test | Conventio nal 1 | Conventio nal 2 | Conventio nal 3 | Conventio nal 4 | Embodim ent 1 | Embodim ent 2 | Embodim ent 3 | Embodim ent 4 |
| Samplin gK value of melt | 0.35 | 0.30 | 0.40 | 0.35 | 0.05 | 0.05 | 0.05 | 0.05 |
| Average value | 0.35 | | | | 0.05 | | | |

**Table 2 Statistical table of densities of recovered aluminum melt after degassing**

| Degassing method | Conventional degassing method | | | | Degassing method of the invention | | | |
|---|---|---|---|---|---|---|---|---|
| Category of test | Conventio nal 1 | Conventio nal 2 | Conventio nal 3 | Conventio nal 4 | Embodim ent 1 | Embodim ent 2 | Embodim ent 3 | Embodim ent 4 |
| Sampling density of melt/(g/c m3) | 2.55 | 2.56 | 2.57 | 2.56 | 2.64 | 2.64 | 2.64 | 2.64 |
| Average value/(g/c m3) | 2.56 | | | | 2.64 | | | |

**Table 3 Statistical table of efficiency and gas consumption of degassing process of recovered aluminum melt**

| Degassing method | Conventional degassing method | | | | Degassing method of the invention | | | |
|---|---|---|---|---|---|---|---|---|
| Category of test | Conventi onal 1 | Conventi onal 2 | Conventi onal 3 | Conventi onal 4 | Embodim ent 1 | Embodim ent 2 | Embodim ent 3 | Embodim ent 4 |
| Degassing efficiency/(m in/t) | 15.6 | 15.2 | 15.3 | 15.5 | 11.3 | 11.5 | 11.4 | 11.4 |
| Average value/(min/t) | 15.4 | | | | 11.4 | | | |
| Gas consumption! (Lit) | 18.3 | 18.2 | 18.1 | 18.2 | 14.2 | 14.3 | 14.3 | 14.4 |
| Average value/(L/t) | 18.2 | | | | 14.3 | | | |

The above Table 1 shows statistical results of the K values of the recovered aluminum melts after degassing purification, and it can be seen from Table 1 that the conventional degassing methods have poor deslagging effects on the recovered aluminum melts, and the average level of the sampling K values of the melts after degassing is 0.35, which has a large gap with a current K value of 0.05 of a normal aluminum melt after degassing, while Embodiment 1, Embodiment 2, Embodiment 3 and Embodiment 4 have an average level of the sampling K values of 0.05 of the melts after degassing, which is comparable with the level of the K value of the normal aluminum melt after degassing and can be used subsequently. This can show that the invention has a good purification effect on the slag inclusions inside the recovered aluminum melts through the design of inert gas types, gas position distribution, a melt temperature, inert gas flow rates, inert gas pressures, inert degassing time, a degassing rotor rotation speed and other technological parameters. Table 2 shows statistical results of the densities of the recovered aluminum melts after degassing, and it can be seen from Table 2 that the conventional degassing methods have poor degassing effects on the recovered aluminum melts, and the average level of the sampling density values of the melts after degassing is 2.56 g/cm³, which has a large gap with a current density value of 2.64 g/cm³ of a normal aluminum melt after degassing, while Embodiment 1, Embodiment 2, Embodiment 3 and Embodiment 4 have an average level of the sampling density values of 2.64 g/cm³ of the melts after degassing, which is comparable with the level of the density value of the normal aluminum melt after degassing and can be used subsequently. This can show that the invention has a good degassing purification effect on the recovered aluminum melts through the design of inert gas types, gas position distribution, a melt temperature, inert gas flow rates, inert gas pressures, inert degassing time, a degassing rotor rotation speed and other technological parameters. Table 3 shows statistics of the efficiency and gas consumption of degassing processes of the recovered aluminum melts. It can be seen from Table 3 that the average level of efficiency and inert gas consumption of the conventional degassing methods is about 15.4 min/t and 18.2 L/t, while the average level of efficiency and inert gas consumption of the degassing methods of Embodiment 1, Embodiment 2, Embodiment 3 and Embodiment 4 is about 11.4 min/t and 14.3 L/t. This can show that the invention can achieve effects of improving the degassing efficiency and reducing the gas consumption through the design of inert gas types, gas position distribution, a melt temperature, inert gas flow rates, inert gas pressures, inert degassing time, a degassing rotor rotation speed and other technological parameters.

Compared with the prior art, the purification method of the recovered aluminum melt for the automobile hub provided by invention has the following advantages.

In the description of the invention, it should be understood that directional or positional relationships indicated by terms "center", "longitudinal", "transverse", "front", "back", "left", "right", "vertical", "horizontal", "top", "bottom", "inner", "outer" and the like are based on directional or positional relationships shown in the accompanying drawing, and are only for the convenience of describing the invention and simplifying the description, rather than indicating or implying that an apparatus or element referred to must have a specific orientation and be constructed and operated in a specific orientation, thus cannot be understood as a limitation of the protection of the invention.

In addition, terms "first" and "second" are used for descriptive purposes only and cannot be construed as indicating or implying relative importance or implicitly specifying the quantity of indicated technical features. Thus, the features limited to "first" and "second" may explicitly or implicitly include one or more of these features. In the description of the invention, "a plurality of" means at least two, such as two and three, unless otherwise expressly and specifically limited.

In the invention, unless otherwise expressly specified and limited, terms "mounted", "connected", "connection", "fixed", etc. are to be understood in a broad sense, for example, as a fixed connection, as a detachable connection, or as an integral part; as a mechanical connection, as an electrical connection or as mutual communication; and as a direct connection, as an indirect connection through an intermediate medium, as communication within two elements or as an interactive relationship between two elements. To those of ordinary skill in the art, the specific meanings of the above terms in the invention can be understood according to specific circumstances.

The above is only optional embodiments of the invention and is not used to limit the invention, and any modification, equivalent replacement, improvement, etc. made within the spirit and principle of the invention should be included in the scope of protection of the invention.

## Claims

1. A purification method of a recovered aluminum melt for an automobile hub, **characterized by** comprising nitrogen degassing of a gas permeable brick pouring ladle bottom layer arranged on a lower portion of a gas permeable brick pouring ladle and argon degassing of a rotor degasser arranged on an upper portion, wherein a gas permeable brick pouring ladle bottom layer nitrogen degassing apparatus comprises three gas permeable bricks distributed at 120°, a depth of a degassing rotor extending into the aluminum melt is 30 cm-70 cm below an aluminum liquid surface, an upper rotor degasser argon degassing apparatus comprises the degassing rotor that extends into the aluminum melt at the depth of 30 cm-70 cm below the aluminum liquid surface, and a temperature of the recovered aluminum melt is controlled at 740°C-760°C.

2. The purification method of the recovered aluminum melt for the automobile hub of claim 1, **characterized in that** a lower gas permeable pouring ladle degassing process is performed in two stages, in the first stage, a nitrogen gas flow rate is 20 L/min-35 L/min, a gas pressure is 0.3 MPa-0.55 MPa, and degassing time is 120-240 s; in the second stage, a nitrogen gas flow rate is 10 L/min-20 L/min, a gas pressure is 0.2 MPa-0.35 MPa, and degassing time is 180-300 s; an upper rotor degassing process is performed in two stages, in the first stage, an argon gas flow rate is 30 L/min-45 L/min, a rotor rotation speed is 400 rpm-550 rpm, and degassing time is 180-280 s; and in the second stage, an argon gas flow rate is 40 L/min-65 L/min, a rotor rotation speed is 300 rpm-420 rpm, and degassing time is 200-360 s.
